# FASCICULE DE BREVET EUROPEEN

(11) **EP 2 054 708 B1**
(45) Date de publication et mention de la délivrance du brevet: **11.01.2012**
(21) Numéro de dépôt: 06764828.7
(22) Date de dépôt: 07.06.2006
(51) Int. Cl.: G01M 99/00

(54) **DISPOSITIF DE GUEUSES GERBABLES**
VERNESTBARE VORSCHALTEINRICHTUNG
NESTABLE BALLAST DEVICE

(43) Date de publication de la demande: 06.05.2009
(73) Titulaire: OXYCOUPAGE ET SOUDURE DE CHAMPAGNE SA, 51170 Poilly (FR)
(72) Inventeur: FOURNIER, Henri, F-51170 Faverolles et Coemy (FR)
(74) Mandataire: Rhein, Alain
(86) Numéro de dépôt international: PCT/FR2006/050505
(87) Numéro de publication internationale: WO 2007/141398

(56) Documents cités:
- WO-A-02/090233
- FR-A1- 2 776 385
- JP-A- 2004 324 352

## Description

La présente invention a pour objet un dispositif de gueuse destiné à permettre la réalisation d'essais de contrôle en matière de sécurité d'engins de levage hydrauliques ou autres, tels que chariots élévateurs, ponts, grues, hayons de véhicules, monte-charge, etc...

Ces engins de levage doivent, de par la législation, satisfaire régulièrement à des contrôles de sécurité. Il en va ainsi, non seulement pour les chariots élévateurs, les grues, les hayons de véhicules, les grues, les monte-charge, mais également pour les ponts roulants, les quais mobiles de déchargement, et les ascenseurs.

Ces contrôles de sécurité consistent, selon la norme actuellement en vigueur, en des essais en charge, à savoir un essai dynamique où l'engin testé doit soulever et déplacer une charge égale à la valeur nominale pour laquelle il a été conçu, et un essai statique où ledit engin doit supporter et maintenir à l'arrêt, une charge, laquelle est plus importante que celle utilisée pour l'essai dynamique.

Actuellement, pour charger l'engin de levage à tester, on entasse ou on suspend des objets de poids divers jusqu'à obtenir la charge désirée.

Cette manière de procéder présente de nombreux inconvénients, en effet la charge nominale diffère d'un engin à un autre, et il est donc peu aisé de réaliser les essais avec précision et sans perte de temps.

D'autre part, en cas de dysfonctionnement de l'engin testé, la charge, qui n'est qu'un empilement pas très stable, peut tomber et occasionner un accident.

Pour pallier cet inconvénient il a été proposé par la Demanderesse dans son brevet français N° FR 2.776.385, un dispositif de gueuse qui comporte un ensemble de plaques de forme carrée ou rectangulaire, présentant chacune inférieurement des pieds, et supérieurement des empreintes creuses disposées chacune au droit d'un desdits pieds, de manière à permettre la superposition desdites plaques par introduction de chacun desdits pieds dans l'une desdites empreintes creuses, tout en conservant entre deux plaques voisines un espace permettant le passage de la fourche d'un engin de levage.

Les plaques peuvent être d'épaisseurs différentes, et donc de poids différents, en sorte que l'on peut constituer un ensemble d'un poids précis, lequel ensemble est d'une grande stabilité.

De manière avantageuse, toutes les plaques sont de poids différents, et il est possible de réaliser de nombreuses combinaisons entre un minimum, correspondant à la plaque la plus légère, jusqu'à un maximum, correspondant à la somme de toutes les plaques.

La stabilité d'un tel empilement est accrue par la solidarisation des plaques entre elles au travers d'un moyen de bridage. A cet effet, les plaques comportent chacune centralement une ouverture de forme allongée, destinée à l'introduction d'une clé, qui consiste en une tige dont l'extrémité d'introduction est munie d'un élément s'étendant dans une direction transversale et apte, par le pivotement de ladite tige selon un angle choisi, à venir se bloquer sous une plaque extrême inférieure, tandis que des moyens de blocage, déplaçables le long de ladite tige, sont aptes à venir serrer la plaque extrême supérieure et immobiliser en rotation ladite tige.

De manière avantageuse, la tige est munie à son autre extrémité, d'un moyen de préhension tel qu'un anneau permettant l'accrochage d'une élingue autorisant la suspension de l'ensemble.

Ce dispositif de gueuses constitue une solution avantageuse aux problèmes rencontrés antérieurement, néanmoins il présente toujours quelques inconvénients.

En effet, ce dispositif nécessite une certaine hauteur sous pont pour permettre la mise en place de la clé, soit le total de la hauteur de la pile et de la hauteur de la clé, en sorte qu'il ne peut pas être utilisé partout, notamment dans les lieux exigus et bas de plafond, tels que des souterrains, gaines d'inspection, de circulation, ou toutes installations limitées à hauteur d'homme, par exemple.

D'autre part, lorsqu'il s'agit de réaliser plusieurs tests successifs, chacun selon un poids différent, et qu'il est nécessaire d'enlever et/ou d'ajouter une ou plusieurs plaques, cela entraîne de nombreuses manipulations longues et peu aisées.

Cet inconvénient apparaît également lors de la phase de passage d'un essai dynamique en charge à un essai statique en charge, puisque lors de cette phase la charge ne doit pas être reposée au sol, selon la législation en vigueur dans la plupart des pays, notamment en France.

La présente invention a pour but de proposer un dispositif de gueuses permettant de remédier à ces divers inconvénients.

Le dispositif de gueuse selon l'invention est destiné à permettre la réalisation d'essais de contrôle en matière de sécurité d'engins de levage hydrauliques ou autres, tels que chariots élévateurs, grues, ponts, hayons de véhicules, monte-charge, etc..., du type comprenant des plaques empilables, chacune pourvue d'une lumière centrale destinée au passage d'une clé constituée d'une tige comprenant à son extrémité inférieure un premier moyen de blocage s'étendant dans une direction transversale, ledit premier moyen de blocage étant conçu apte à venir se bloquer sous la plaque extrême inférieure, ou étant constitué par cette dernière ou par un support, ledit dispositif est caractérisé en ce que d'une part la lumière centrale de chacune desdites plaques est de dimensions conçues aptes à permettre le pivotement de ladite tige; et d'autre part lesdites plaques comportent chacune une fente reliant ladite lumière centrale à un bord, et qui est d'une largeur de dimension supérieure à la dimension minimale de la section transversale de ladite tige, en sorte de permettre une introduction de ladite tige dans les fentes des plaques empilées par une voie frontale.

Selon une caractéristique particulière de l'invention, ledit premier moyen de blocage est conçu apte, par le pivotement de ladite tige selon un angle choisi, à venir se bloquer sous la plaque extrême inférieure.

Selon une autre caractéristique, la clé est de section transversale présentant au moins deux dimensions différentes, la dimension maximale de cette section transversale étant supérieure à la largeur desdites fentes, de manière à empêcher le retrait de plaques après pivotement relatif entre lesdites plaques et ladite tige.

Un tel dispositif permet la mise en place de la clé par une voie frontale, et permet d'ajouter une ou plusieurs plaques à un empilement déjà équipé d'une clé, et éventuellement déjà suspendu par cette dernière.

Selon une caractéristique additionnelle du dispositif de gueuse selon l'invention, la tige est de section transversale rectangulaire.

Selon une autre caractéristique additionnelle du dispositif de gueuse selon l'invention, la clé comprend au moins un second moyen de blocage mobile longitudinalement sur la tige, et apte à venir coopérer avec une plaque en sorte de l'immobiliser en rotation sur ladite tige.

Un tel second moyen de blocage permet de bloquer une ou plusieurs plaques supplémentaires ajoutées à un empilement déjà bloqué.

Selon une autre caractéristique additionnelle du dispositif de gueuse selon l'invention, chacune des plaques comporte dans la région comprenant la lumière centrale, un trou, ou encore une fente, ou analogue, avec lequel est destinée à coopérer une partie du moyen de blocage mobile, en sorte d'indexer l'orientation de ce dernier par rapport à ladite plaque.

Selon une autre caractéristique additionnelle du dispositif de gueuse selon l'invention, les plaques sont de forme carrée ou rectangulaire, et présentent chacune inférieurement des pieds, et supérieurement des empreintes creuses disposées chacune au droit d'un desdits pieds, de manière à permettre la superposition desdites plaques par introduction de chacun desdits pieds dans l'une desdites empreintes creuses, tout en conservant entre deux plaques voisines un espace permettant le passage de la fourche d'un engin de levage.

Selon une autre caractéristique additionnelle du dispositif de gueuse selon l'invention, les plaques sont d'épaisseurs différentes.

Selon une caractéristique avantageuse du dispositif de gueuse selon l'invention, il comporte une plaque conçue apte à constituer si nécessaire la plaque extrême supérieure d'un empilement, et qui est munie de compartiments aptes à loger des masses amovibles préhensibles manuellement.

Les avantages et les caractéristiques du dispositif de gueuse selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective et en éclaté d'un premier mode de réalisation du dispositif de gueuse selon l'invention.
- la figure 2 représente une vue schématique en perspective et en éclaté d'un second mode de réalisation du même dispositif de gueuse.
- la figure 3 représente une vue schématique en perspective d'une partie d'une variante du dispositif de gueuse selon l'invention.
- la figure 4 représente une vue schématique, en coupe selon l'axe d'une fente longitudinale d'une plaque de gueuse selon l'invention, dans un mode particulier de réalisation
- la figure 5 représente, en vue de dessus, une variante d'un dispositif selon le même mode de réalisation que la figure 1.

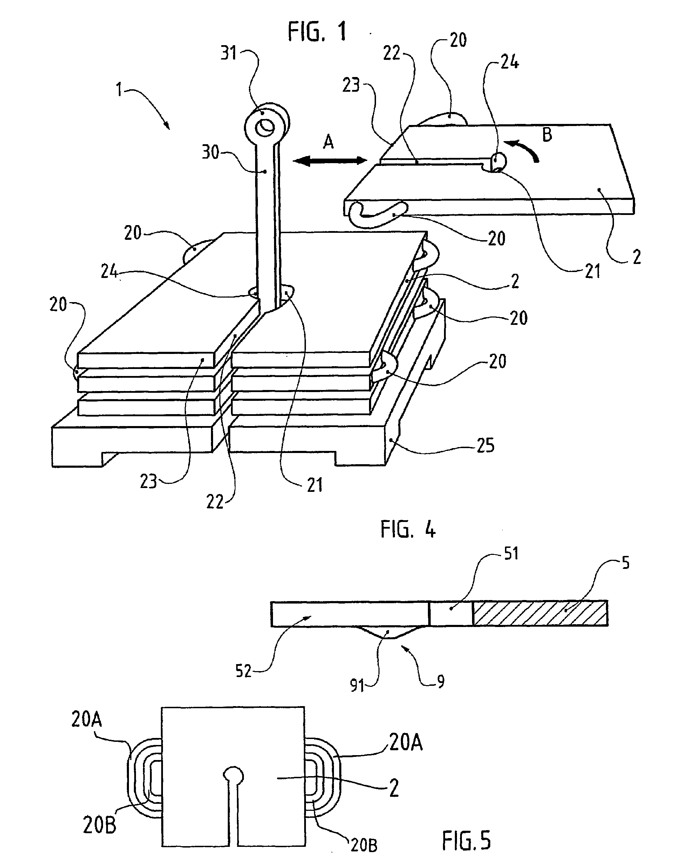

En référence à la figure 1, on peut voir un premier mode de réalisation d'un dispositif de gueuse 1 selon l'invention, plus particulièrement destiné à des tests dans des installations peu accessibles, et de masse limitée.

Le dispositif de gueuse 1 est constitué de l'empilement de plaques 2, qui en l'occurrence sont toutes de mêmes dimensions et de même poids, sachant qu'il pourrait très bien en être autrement, elles pourraient ainsi présenter des épaisseurs différentes.

Ces plaques 2 sont destinées à être manipulées manuellement, et elles comportent à cet effet, de préférence sur chacun de deux côtés opposés une poignée 20.

Pour faciliter le saisissement des poignées 20, notamment lorsque les plaques 2 sont empilées, il est prévu deux types de plaques 2 différentes.

Dans une première variante de réalisation, tel que visible sur la figure 1, les plaques 2 diffèrent par la longueur du déport des poignées 20. Ainsi, en alternant dans l'empilement les deux types de plaques 2, le saisissement des poignées ne présente aucun inconvénient.

Dans une deuxième variante de réalisation, tel que visible sur la figure 5, les plaques 2 comportent des poignées 20A et 20B situées aux extrémités d'un axe de gravité, et de taille différente de chaque côté de la plaque 2, l'une étant inscrite dans l'autre. Ces plaques 2 sont destinées à être empilées en alternance, de façon à pouvoir manoeuvrer chacune d'elles en équilibre, et sans être gêné par les poignées de la plaque suivante ou précédente ; ainsi, d'un même côté de la pile, on a une alternance de poignées de types opposé : 20A, 20B, 20A, 20B, et l'alternance contraire : 20B, 20A, 20B, 20A, de l'autre côté de la pile de plaques 2.

D'autres variantes peuvent être envisagées, telles que des plaques comportant des découpes, ou autre, sans pour autant s'éloigner de l'invention. On notera qu'avantageusement, afin de respecter l'alternance lors de l'empilement, les plaques 2 sont des couleurs différentes selon le type auquel elles appartiennent.

Chacune des plaques 2 comporte une lumière centrale 21, en l'occurrence de forme ronde, reliée par une fente 22 à un bord 23, lequel est de préférence un bord non équipé d'une poignée 20. On notera que les poignées sont, avantageusement, parallèles à la fente 22.

Le dispositif de gueuse 1 comprend également une clé 3 destinée d'une part à stabiliser l'empilement de plaques 2, et d'autre part à permettre sa préhension.

La clé 3 comprend essentiellement une tige 30 munie à une extrémité d'un anneau 31 de préhension et à l'autre extrémité d'un moyen de blocage, qui peut être notamment constitué d'une barre transversale, non visible sur la figure.

La lumière centrale 21 comporte, avantageusement, au moins un épaulement 24 perpendiculaire à la fente 22, conçu apte à permettre l'arrêt en rotation relative de la clé 3 par rapport à la plaque 2, ou réciproquement.

Dans une application préférée de ce premier mode de réalisation, la clé 3 est solidarisable à un support 25, lequel peut notamment être, avantageusement, constitué de l'une desdites plaques 2.

Une fois la clé 3 ainsi solidarisée au support 25 par un moyen de fixation usuel tel que vissage, goupillage, soudage, ou autre, il suffit de présenter successivement chacune des plaques. 2, dans une orientation angulaire différente l'une par rapport à l'autre. La lumière 21 de chacune des plaques 2 est amenée par un mouvement de translation A en concordance avec la clé 3. Un mouvement de rotation B achève la mise en place de la plaque 2, ledit épaulement 24 de la lumière 21 venant coopérer avec la clé 3.

Dans une application préférée, la tige 30 est de section rectangulaire, sa largeur étant inférieure à la largeur des fentes 22, tandis que sa longueur, qui s'étend dans la même direction que la barre transversale, y est supérieure, en sorte que le mouvement relatif de translation entre cette tige 30 et ces fentes 22 ne puisse se faire que selon une seule orientation. Par contre, le diamètre des lumières centrales 21 est supérieur à cette longueur de la section transversale pour permettre un pivotement axial relatif entre la tige 30 et la plaque 2, mais il est inférieur à la longueur de la barre transversale.

On comprendra que l'empilement des plaques 2 peut être réalisé selon deux méthodes différentes.

Selon la première, correspondant au cas d'une clé 3 munie d'une barre transversale, on empile les plaques 2 en veillant à mettre en regard toutes les fentes 22, puis on introduit dans ces dernières la clé 3 de manière frontale jusqu'à atteindre les lumières centrales 21, et enfin, on fait pivoter la clé 3 d'un quart de tour afin de placer la barre transversale perpendiculairement aux gorges 22.

Selon la seconde, correspondant au cas d'une clé 3 solidarisée avec un support 25 qui peut être constitué d'une plaque 2, on empile les plaques 2 en les enfilant une à une sur la tige 30, en faisant passer celle-ci dans la fente 22, puis en faisant opérer un pivotement, par exemple d'un quart de tour à la plaque 2 lorsque la tige 30 est dans la lumière centrale 21, avant de la poser.

Cette manière de procéder peut également être utilisée pour ajouter des plaques 2 à un empilement réalisé selon la première méthode.

Dans une réalisation préférée, la rotation des plaques 2 est bloquée par une butée ménagée au niveau de la découpe effectuée dans chaque plaque au niveau de sa lumière 21. De façon préférée, l'épaulement 24 constitue une telle butée. Dans une variante préférée de réalisation, la rotation des plaques 2 s'effectue selon un angle de 90°.

Dans les deux cas, il est prévu que la plaque 2 extrême inférieure repose sur un socle permettant le passage du moyen de blocage, ou bien que cette plaque 2 extrême inférieure soit conformée pour permettre un tel passage.

Notamment, la plaque 2 extrême peut elle-même constituer un tel socle, et, dans un mode particulier de réalisation, la clé peut être rendue solidaire d'un tel socle, par soudure, vissage, ou autre.

L'exécution vissée est particulièrement intéressante dans le cas d'utilisation dans des locaux malcommodes d'accès, où le transport séparé du socle et de la clé pourrait s'avérer nécessaire.

Par ailleurs, il peut être prévu que la clé 3 soit équipée d'un moyen, non représenté, permettant de l'immobiliser en pivotement après mise en place du moyen de blocage.

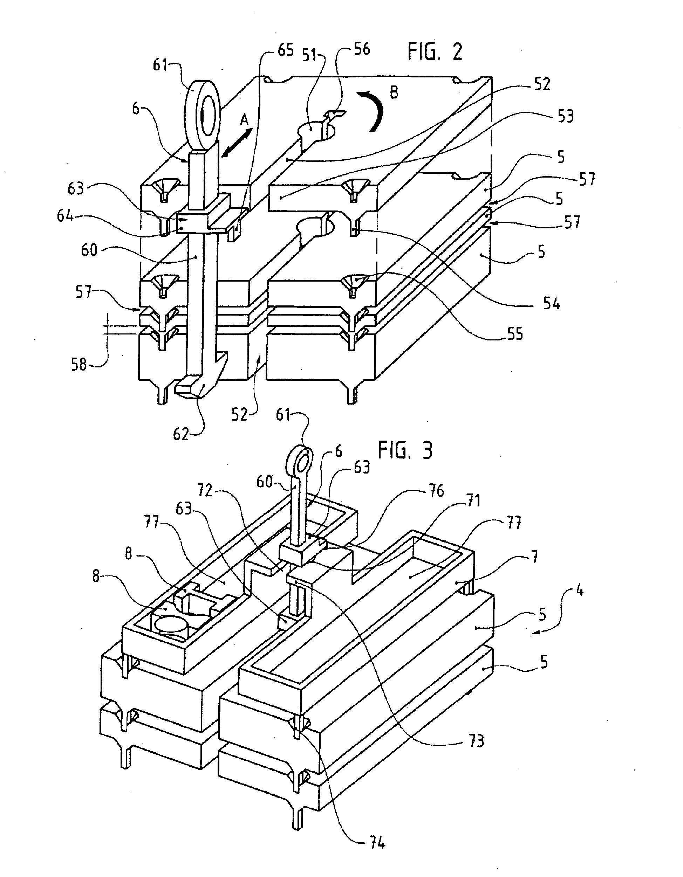

En référence maintenant à la figure 2, on peut voir un second mode de réalisation 4 du dispositif de gueuse selon l'invention, lequel est plus particulièrement destiné à des charges plus importantes. Dans ce contexte, la manipulation en rotation de plaques par rapport à l'axe de la clé est malcommode, voire impossible.

Ce dispositif de gueuses 4 comprend un empilement de plaques 5 comprenant chacune une lumière centrale 51, en l'occurrence de forme ronde, reliée par une fente 52 à un bord 53.

Les plaques 5 présentent de plus chacune inférieurement des pieds 54, et supérieurement des empreintes creuses 55 disposées en concordance avec ces pieds 54, de préférence chacune au droit d'un des pieds 54, en sorte de permettre, lors de la superposition des plaques 5, l'introduction des pieds 54 dans les empreintes 55, afin de réaliser une immobilisation dans le sens transversal et dans le sens longitudinal. De plus, les pieds 54 sont prévus plus longs que la profondeur des empreintes 55, afin de conserver entre deux plaques 5 superposées un espace 57 permettant le passage de la fourche d'un engin de levage.

Les plaques 5 sont d'épaisseurs différentes, et donc de poids différents, tandis que, de préférence, la hauteur 58 de l'espace 57 qui sépare deux plaques superposées est constante.

Le choix de jeux de plaques 5 d'épaisseurs différentes permet d'apporter une solution pratique au problème fréquent de constitution d'une charge de masse donnée, pour l'épreuve de moyens de levage, en fonction des desiderata des services d'inspection. Il est en effet plus aisé de se rapprocher facilement de la valeur requise, si l'étagement des masses des plaques 5 choisies pour constituer le jeu de gueuse 4 est choisi de façon à permettre un grand nombre de combinaisons.

Ainsi, avec un seul jeu de gueuses judicieusement calculées, il est possible de couvrir les plages usuelles d'utilisation, avec les suppléments d'épreuve usuels de 10%, 25%, 33%, selon les cas.

A titre d'exemple non limitatif, un jeu de 9 plaques 5 respectivement de 120/200/280/530/860/1000/1010/1320/1340 kg permet de couvrir les épreuves de 1000 kg à 6650 kg usuelles pour les chariots élévateurs, avec 52 valeurs de combinaisons.

De façon préférée, chaque plaque 5 d'une masse donnée est peinte d'une couleur donnée, de façon à faciliter son repérage par le manutentionnaire.

Ce dernier dispose, de façon à déterminer instantanément la combinaison optimale pour réaliser la masse d'épreuve nécessaire, parmi le jeu de plaques 5 disponibles, d'un tableau recensant les différents combinaisons de plaques ainsi que leurs codes couleur respectifs.

Ceci facilite encore la manutention, et permet de donner des consignes rapides et facilement vérifiables. Ce tableau fait encore apparaître les écarts, en masse ou en pourcentage, par rapport à la masse nominale d'épreuve, ainsi que le nombre de plaques 5 nécessaires pour constituer le lot.

Ce tableau prévoit avantageusement, par rapport à une charge dynamique donnée, déjà constituée, l'identification des plaques 5 à rajouter pour obtenir la charge d'épreuve statique désirée correspondante.

Le dispositif de gueuse 4 comprend également une clé 6 destinée à stabiliser l'empilement de plaques 5, et à permettre sa préhension.

La clé 6 se présente sous la forme d'une tige 60 munie à une extrémité d'un anneau 61 de préhension et à l'autre extrémité d'un moyen de blocage constitué préférentiellement d'une barre transversale 62.

Dans une variante de réalisation, la tige 60 est de section carrée.

Dans un autre mode de réalisation la tige 60 est de section rectangulaire qui ne permet qu'un sens d'introduction dans les fentes 52, tandis que les lumières centrales 51 permettent son pivotement, de manière analogue au premier mode de réalisation représenté à la figure 1.

La clé est de plus équipée d'un moyen de blocage 63 mobile longitudinalement sur la tige 60, et apte à venir coopérer avec une plaque 5 en sorte de l'immobiliser en rotation sur la tige 60. Ce moyen de blocage 63 comprend d'une part un coulisseau 64 susceptible de coulisser sur la tige 60, et d'être éventuellement bloqué au travers, par exemple, d'un moyen de serrage, non représenté, et d'autre part un élément d'indexage 65 apte à être introduit dans une lumière 56 pratiquée à proximité de la lumière centrale 51. On comprendra que, après un mouvement de translation relatif A entre la clé 6 et la ou les plaques 5 selon la direction de leurs fentes 52, suivi d'un pivotement relatif B entre la clé 6 et la ou les plaques 5, au niveau de leurs lumières centrales 51 alignées, et introduction de l'élément d'indexage 65 dans la lumière 56, la clé ne puisse plus pivoter.

Le rajout ultérieur d'une ou plusieurs plaques 5 par rapport à un empilage déjà constitué, sans rotation de ces plaques, nécessite que ces nouvelles plaques soient amenées, dans la direction de translation relative A, avec leur fente 52 parallèle aux fentes de l'empilage déjà constitué. A cet effet, la dimension transversale de la tige 60 de la clé 6 doit être inférieure à la largeur de la fente 52 de la plaque 5 que l'on rajoute, ce qui explique le choix préférentiel de la section carrée pour la tige 60, tel qu'exposé ci-dessus.

Ce rajout par simple translation, à hauteur d'homme, avec un simple chariot élévateur par exemple, est donc extrêmement facile, rapide, et sûr.

Dans une exécution préférée, l'élément d'indexage 65 est constitué d'un fer plat, et la lumière 56 est constituée d'une fente.

Il peut être prévu plusieurs moyens de blocage 63, à cet effet chacun est d'une épaisseur inférieure ou, de préférence, égale à la distance entre deux plaques, déterminée par la hauteur que laissent subsister les pieds 54 entre deux plaques 5 superposées.

Le ou les moyens de blocage 63 supplémentaires permettent notamment d'immobiliser une plaque ajoutée à un empilement déjà constitué, et notamment une plaque telle que la plaque 7 représentée à la figure 3, et qui est conçue apte à être utilisée comme plaque extrême supérieure pour un dispositif de gueuse 4.

Cette plaque 7 présente, de manière analogue aux plaques 5, une lumière centrale 71, reliée par une fente 72 à un bord 73, des pieds 74, et une lumière d'indexage 76. cette plaque 7 comporte de plus, supérieurement, des compartiments 77 destinés à loger des masses amovibles 8, de préférence préhensibles manuellement, qui peuvent être de poids différents, et permettant d'accroître le poids de l'échantillon de valeur à tester, sous la forme du dispositif de gueuse 4 en cours de test. Cette plaque spéciale peut, notamment, être constituée d'une épaisseur telle que capable de former une des plaques de l'empilement.

De façon avantageuse, et quel que soit le mode d'exécution, les plaques 2 des gueuses 1 selon l'invention comportent, sur une de leurs faces, notamment la face inférieure, tel que visible sur la figure 4, des moyens de centrage 9 de la clé 3 dans son mouvement relatif par rapport à la lumière de passage correspondante, par exemple sous la forme de profils triangulaires 91 soudés ou fixés ou vissés, ou de profils analogues formant rampe d'introduction.

On comprendra, encore, que les moyens de blocage mobiles 63, non représentés sur la figure 1 représentant le premier mode d'exécution, peuvent néanmoins, sans s'éloigner du cadre de l'invention, être intégrés dans ce premier mode d'exécution, et comporter également un élément d'indexage 65 apte à coopérer avec une lumière 56 ou analogue dont sont alors munies les plaques 2.

En somme, quel que soit le mode de réalisation, la possibilité d'engagement frontal (facile à réaliser selon le cas manuellement ou avec un simple chariot élévateur) des plaques élémentaires dans un mouvement de translation relatif par rapport à une clé, associée éventuellement à la possibilité additionnelle d'un pivotement relatif entre cette clé et les plaques, apporte une solution simple et économique au problème posé, car il n'est plus nécessaire de disposer d'une hauteur importante. De plus, la rapidité, la facilité, et la proximité de manutention minimisent les risques d'accidents. La solution selon l'invention permet, enfin, de disposer, avec un nombre de plaques restreint, d'une grande diversité de valeurs de masses d'épreuves.

## Revendications

1. Dispositif de gueuse (1 ; 4) destiné à permettre la réalisation d'essais de contrôle en matière de sécurité d'engins de levage hydrauliques ou autres, tels que chariots élévateurs, grues, ponts, hayons de véhicules, monte-charge, etc..., du type comprenant des plaques (2 ; 5) empilables, chacune pourvue d'une lumière centrale (21 ; 51) destinée au passage d'une clé (3 ; 6) constituée d'une tige (30 ; 60) comprenant à son extrémité inférieure un premier moyen de blocage (62) s'étendant dans une direction transversale, ledit premier moyen de blocage (62) étant conçu apte à venir se bloquer sous la plaque extrême inférieure, ou étant constitué par cette dernière ou par un support (25), la lumière centrale (21 ; 51) de chacune desdites plaques (2 ; 5) étant de dimensions conçues aptes à permettre le pivotement de ladite tige (30, 60) ; ledit dispositif est **caractérisé en ce que** lesdites plaques (2 ; 5) comportent chacune une fente (22 ; 52) reliant ladite lumière centrale (21 ; 51) à un bord (23 ; 53), et qui est d'une largeur de dimension supérieure à la dimension minimale de la section transversale de ladite tige (30 ; 60), en sorte de permettre une introduction dans les fentes (22 ; 52) des plaques (2 ; 5) empilées par une voie frontale de ladite tige (30 ; 60).

2. Dispositif de gueuse (1, ;4) selon la revendication 1, **caractérisé en ce que** ledit premier moyen de blocage (62) est conçu apte, par le pivotement de ladite tige (30 ; 60) selon un angle choisi, à venir se bloquer sous la plaque extrême inférieure.

3. Dispositif de gueuse (1 ; 4) selon la revendication 1 ou la revendication 2, **caractérisé en ce que** ladite clé (3 ; 6) est de section transversale présentant au moins deux dimensions différentes, la dimension maximale de cette section transversale étant supérieure à la largeur desdites fentes (22 ; 52), de manière à empêcher le retrait de plaques après pivotement relatif entre lesdites plaques et ladite tige (30, 60).

4. Dispositif de gueuse (1 ; 4) selon l'une quelconque des revendications précédentes, **caractérisé en ce que** ladite tige (30 ; 60) est de section transversale rectangulaire.

5. Dispositif de gueuse (1 ; 4) selon l'une quelconque des revendications 1 ou 2, **caractérisé en ce que** ladite tige (30, 60) est de section transversale carrée.

6. Dispositif de gueuse (1 ; 4) selon l'une des revendications précédentes, **caractérisé en ce qu'**il comporte au moins un moyen de blocage mobile (63) apte à venir serrer la plaque extrême supérieure et immobiliser en rotation ladite tige (30 ; 60).

7. Dispositif de gueuse (1 ; 4) selon l'une des revendications précédentes, **caractérisé en ce que** la clé (3 ; 6) comprend au moins un second moyen de blocage mobile (63) longitudinalement sur la tige (30 ; 60), et apte à venir coopérer avec une plaque (2 ; 5) en sorte de l'immobiliser en rotation sur ladite tige (30 ; 60).

8. Dispositif de gueuse (1 ; 4) selon l'une quelconque des revendications 6 et 7 caractérisé en ce chacune des 6 plaques (2 ; 5) comporte dans la région comprenant la lumière centrale (21 ; 51), un trou, ou encore une fente (56), ou analogue, avec lequel est destinée à coopérer une partie (65) du moyen de blocage mobile (63), en sorte d'indexer l'orientation de ce dernier par rapport à ladite plaque (2 ; 5).

9. Dispositif de gueuse (4) selon l'une quelconque des revendications précédentes, **caractérisé en ce que** les plaques (5) sont de forme carrée ou rectangulaire, et présentent chacune inférieurement des pieds (54), et supérieurement des empreintes creuses (55) disposées chacune au droit d'un desdits pieds (54), de manière à permettre la superposition desdites plaques (5) par introduction de chacun desdits pieds (54) dans l'une desdites empreintes creuses (55), tout en conservant entre deux plaques (5) voisines un espace (57) permettant le passage de la fourche d'un engin de levage.

10. Dispositif de gueuse (1 ; 4) selon l'une quelconque des revendications précédentes, **caractérisé en ce que** les plaques (2 ; 5) sont d'épaisseurs différentes.

11. Dispositif de gueuse (1 ; 4) selon l'une quelconque des revendications précédentes, **caractérisé en ce qu'**il comporte une plaque (7) conçue apte à constituer si nécessaire la plaque extrême supérieure d'un empilement, et qui est munie de compartiments (77) aptes à loger des masses amovibles (8) préhensibles manuellement.

12. Dispositif de gueuse (1 ; 4) selon l'une quelconque des revendications précédentes, **caractérisé en ce que** la lumière centrale (21 ; 51) comporte au moins un épaulement (24) formant butée, perpendiculaire à la fente (22), conçu apte à permettre l'arrêt en rotation relative de la clé (3 ; 6) par rapport à la plaque (2 ; 5), ou réciproquement.

13. Dispositif de gueuse (1 ; 4) selon l'une quelconque des revendications précédentes, **caractérisé en ce que** les plaques (2 ; 5) comportent, sur une de leurs faces, notamment la face inférieure, des moyens de centrage (9) de la clé (3 ; 6) dans son mouvement relatif par rapport à la lumière (21 ; 51) de passage correspondante, par exemple sous la forme de profils triangulaires (91) soudés ou fixés ou vissés, ou de profils analogues formant rampe d'introduction.

14. Dispositif de gueuse (1 ; 4) selon l'une quelconque des revendications précédentes, **caractérisé en ce que** le jeu de gueuses est constitué de plaques (2, 5) de masses différentes, chacune peinte ou portant un code couleur particulier propre à cette masse, ledit code couleur étant reporté sur un tableau destiné à l'opérateur recensant les différentes combinaisons de plaques élémentaires avec leurs codes couleurs et le total de la masse qu'elles constituent ensemble dans chacune de ces combinaisons.

## Claims

1. Nestable ballast device (1; 4) designed to permit the carrying out of control tests regarding the safety of hydraulic or other lifting appliances, such as forklift trucks, cranes, bridges, vehicle tailboards, goods elevators, etc..., of the type comprising stackable plates (2; 5), each provided with a central opening (21; 51) designed for the passing through of a key (3; 6) consisting of a rod (30; 60) comprising at its lower end a first blocking means (62) extending in a transverse direction, said first blocking means (62) being designed capable of getting blocked under the extreme lower plate, or being comprised of the latter or of a support (25), the central opening (21; 51) of each of said plates (2; 5) having dimensions designed capable of permitting the pivoting of said rod (30, 60); wherein said plates (2; 5) each include a slot (22; 52) connecting said central opening (21; 51) to an edge (23; 53), and the width of which has a larger dimension than the minimum dimension of the cross-section of said rod (30; 60), so as to permit the insertion in the slots (22; 52) of the plates (2; 5) stacked through a front line of said rod (30; 60).

2. Nestable ballast device (1;4) according to claim 1, wherein said first blocking means (62) is designed capable, through the pivoting of said rod (30; 60) according to a chosen angle, of getting blocked under the extreme lower plate.

3. Nestable ballast device (1; 4) according to claim 1 or claim 2, wherein said key (3; 6) has a cross-section having at least two different dimensions, the maximum dimension of said cross-section being larger than the width of said slots (22; 52), in order to prevent the withdrawal of the plates after the relative pivoting between said plates and said rod (30, 60).

4. Nestable ballast device (1; 4) according to any of the preceding claims, wherein said rod (30; 60) has a rectangular cross-section.

5. Nestable ballast device (1; 4) according to any of claims 1 or 2, wherein said rod (30, 60) has a square cross-section.

6. Nestable ballast device (1; 4) according to one of the preceding claims, wherein it includes at least one movable blocking means (63) capable of grasping the extreme upper plate and immobilize in rotation said rod (30; 60).

7. Nestable ballast device (1; 4) according to one of the preceding claims, wherein the key (3; 6) comprises at least one second movable blocking means (63) longitudinally on the rod (30; 60), and capable of cooperating with a plate (2; 5) so as to immobilize it in rotation on said rod (30; 60).

8. Nestable ballast device (1; 4) according to any of claims 6 and 7, wherein each of the plates (2; 5) includes, in the area comprising the central opening (21; 51), a hole, or a slot (56), or similar, with which is designed to cooperate a portion (65) of the movable blocking means (63), so as to index the orientation of the latter with respect to said plate (2; 5).

9. Nestable ballast device (4) according to any of the preceding claims, wherein the plates (5) are square or rectangular, and each have feet (54) inside, and on top hollow imprints (55) each placed in front of one of said feet (54), in order to permit the stacking of said plates (5) through insertion of each of said feet (54) into one of said hollow imprints (55), yet keeping between two adjacent plates (5) a space (57) permitting the passing through of the fork of a lifting appliance.

10. Nestable ballast device (1; 4) according to any of the preceding claims, wherein the plates (2; 5) have different thicknesses.

11. Nestable ballast device (1; 4) according to any of the preceding claims, wherein it includes a plate (7) designed capable of constituting, if necessary, the extreme upper plate of a stack, and that is equipped with compartments (77) capable of holding movable masses (8) capable of being grasped manually.

12. Nestable ballast device (1; 4) according to any of the preceding claims, wherein the central opening (21; 51) includes at least one shoulder (24) forming a stop, perpendicular to the slot (22), designed capable of permitting the stopping in relative rotation of the key (3; 6) with respect to the plate (2; 5), or vice versa.

13. Nestable ballast device (1; 4) according to any of the preceding claims, wherein the plates (2; 5) include, on one of their sides, in particular the lower side, means for centering (9) the key (3; 6) in its relative movement with respect to the corresponding passage opening (21; 51), for example in the form of triangular profile bars (91) welded or fixed or screwed on, or of similar profile bars forming an insertion slope.

14. Nestable ballast device (1; 4) according to any of the preceding claims, wherein the set of ballasts is composed of plates (2, 5) having different masses, each painted or bearing a distinctive color code specific to said masse, said color code being given in a table designed for the operator enumerating the various combinations of basic plates with their color codes and the total of the mass that they constitute together in each of said combinations.

## Patentansprüche

1. Vernestbare Vorschalteinrichtung (1; 4), vorgesehen, um die Ausführung von Kontrollversuchen in Bezug auf die Sicherheit hydraulischer Hebegeräte oder dergleichen wie Gabelstapler, Kräne, Brücken, Heckklappen von Fahrzeugen, Lastenaufzüge, usw... zu erlauben, der Art umfassend aufstapelbare Platten (2; 5), die jeweils mit einer mittigen Öffnung (21; 51) ausgestattet sind, die für den Durchgang eines Schlüssels (3; 6) vorgesehen ist, der aus einem Balken (30; 60) besteht, der an seinem unteren Ende ein erstes Sperrmittel (62) umfasst, welches sich nach einer Querrichtung erstreckt, wobei das besagte erste Sperrmittel (62) geeignet vorgesehen sei, um sich unterhalb der unteren Endplatte zu sperren, oder durch diese letztere oder durch einen tragenden Unterstellblock gebildet sei, wobei die mittige Öffnung (21; 51) einer jeden von den besagten Platten (2; 5) Abmessungen aufweist, die geeignet vorgesehen sind, um die Schwenkbewegung des besagten Balkens (30, 60) zu erlauben; wobei die besagte Vorrichtung **dadurch gekennzeichnet ist, dass** die besagten Platten (2; 5) jeweils einen Spalt (22; 52) umfassen, der die besagte mittige Öffnung (21; 51) mit einem Kantrand (23; 53) verbindet, und der eine Breite aufweist, die größer ist als das Kleinstmaß des Querschnitts des besagten Balkens (30; 60), derart, um einen frontalen Einschub des besagten Balkens (30; 60) in die Spalte (22; 52) der aufgestapelten Platten (2; 5) zu erlauben.

2. Vernestbare Vorschalteinrichtung (1; 4) nach Anspruch 1, **dadurch gekennzeichnet, dass** das besagte erste Sperrmittel (62) geeignet vorgesehen ist, um durch eine Schwenkbewegung des besagten Balkens (30; 60) nach einem gewählten Winkel sich unterhalb der unteren Endplatte zu sperren.

3. Vernestbare Vorschalteinrichtung (1; 4) nach Anspruch 1 oder Anspruch 2, **dadurch gekennzeichnet, dass** der besagte Schlüssel (3; 6) einen Querschnitt aufweist, der zumindest zwei unterschiedliche Abmessungen aufweist, wobei das Höchstmaß dieses Querschnitts größer sei als die Breite der besagten Spalte (22; 52), derart, um das Herausziehen der Platten nach einer relativen Schwenkbewegung zwischen den besagten Platten und dem besagten Balken (30, 60) zu verhindern.

4. Vernestbare Vorschalteinrichtung (1; 4) nach irgendeinem der vorgehenden Ansprüche, **dadurch gekennzeichnet, dass** der besagte Balken (30; 60) einen rechteckigen Querschnitt aufweist.

5. Vernestbare Vorschalteinrichtung (1; 4) nach irgendeinem der Ansprüche 1 oder 2, **dadurch gekennzeichnet, dass** der besagte Balken (30, 60) einen viereckigen bzw. quadratischen Querschnitt aufweist.

6. Vernestbare Vorschalteinrichtung (1; 4) nach einem der vorgehenden Ansprüche, **dadurch gekennzeichnet, dass** sie zumindest ein bewegbares Sperrmittel (63) umfasst, das geeignet ist, um die obere Endplatte zu spannen und den besagten Balken (30; 60) in Drehung unbewegbar zu machen.

7. Vernestbare Vorschalteinrichtung (1; 4) nach einem der vorgehenden Ansprüche, **dadurch gekennzeichnet, dass** der Schlüssel (3; 6) zumindest ein zweites Sperrmittel (63) umfasst, das dem Balken (30; 60) entlang bewegbar ist, und das geeignet ist, um mit einer Platte (2; 5) zusammenzuwirken, derart, um sie am besagten Balken (30; 60) in Drehung unbewegbar zu machen.

8. Vernestbare Vorschalteinrichtung (1; 4) nach irgendeinem der Ansprüche 6 und 7, **dadurch gekennzeichnet, dass** jede von den Platten (2; 5) in dem Bereich, der die mittige Öffnung (21; 51) umfasst, ein Loch, oder auch einen Schlitz (56) oder dergleichen, umfasst, mit welchem ein Teil (65) des bewegbaren Sperrmittels (63) vorgesehen ist, zusammenwirken, derart, um die Orientierung dieses letzteren hinsichtlich der besagten Platte (2; 5) zu indexieren.

9. Vernestbare Vorschalteinrichtung (4) nach irgendeinem der vorgehenden Ansprüche, **dadurch gekennzeichnet, dass** die Platten (5) eine viereckige bzw. quadratische oder rechteckige Form aufweisen und jeweils unten Sockelfüßchen (54) und oben Formhohlräume (55) aufweisen, die jeweils gegenüber einem der besagten Sockelfüßchen (54) angeordnet sind, derart, um die Übereinanderlagerung der besagten Platten (5) durch den Einschub eines jeden von den besagten Sockelfüßchen (54) in einen der besagten Formhohlräume (55) zu erlauben, während zwischen zwei benachbarten Platten (5) ein Abstand (57) beibehalten wird, der den Durchgang der Gabel eines Hebegeräts ermöglicht.

10. Vernestbare Vorschalteinrichtung (1; 4) nach irgendeinem der vorgehenden Ansprüche, **dadurch gekennzeichnet, dass** die Platten (2; 5) unterschiedliche Dicken aufweisen.

11. Vernestbare Vorschalteinrichtung (1; 4) nach irgendeinem der vorgehenden Ansprüche, **dadurch gekennzeichnet, dass** sie eine Platte (7) umfasst, die geeignet vorgesehen ist, um, falls notwendig, die obere Endplatte einer Aufstapelung zu bilden, und die mit abgeteilten Hohlräumen (77) ausgestattet ist, die geeignet sind, um darin manuell abnehmbare Zusatzgewichte (8) aufzunehmen.

12. Vernestbare Vorschalteinrichtung (1; 4) nach irgendeinem der vorgehenden Ansprüche, **dadurch gekennzeichnet, dass** die mittige Öffnung (21; 51) zumindest einen nach innen gerichteten, als Anlagekante dienenden Schulterbereich (24) senkrecht zu dem Einschubspalt (22) umfasst, der geeignet vorgesehen ist, um die Sperrung des Schlüssels (3; 6) in relativer Drehung hinsichtlich der Platte (2; 5) oder wechselseitig zu erlauben.

13. Vernestbare Vorschalteinrichtung (1; 4) nach irgendeinem der vorgehenden Ansprüche, **dadurch gekennzeichnet, dass** die Platten (2; 5) auf der einen von ihren Seiten, insbesondere auf der unteren Seite, Mittel zum Zentrieren (9) des Schlüssels (3; 6) in seiner relativen Bewegung hinsichtlich der entsprechenden Durchgangsöffnung (21; 51), zum Beispiel in Form von geschweißten oder befestigten oder festgeschraubten dreieckigen Profilen (91) oder von ähnlichen Profilen umfassen, die eine Einschubrampe bilden.

14. Vernestbare Vorschalteinrichtung (1; 4) nach irgendeinem der vorgehenden Ansprüche, **dadurch gekennzeichnet, dass** das Set der vernestbaren Vorschalteinrichtungen durch Platten (2, 5) mit verschiedenen Gewichten gebildet ist, die jeweils gefärbt sind oder einen besonderen Farbcode tragen, der für dieses Gewicht kennzeichnend ist, wobei der besagte Farbcode in einer Tabelle nachsehbar ist, die für den Bediener bestimmt ist, der die verschiedenen Kombinationen von einfachen Platten mit ihren Farbcodes und das Gesamtgewicht, das sie zusammen in jeder von diesen Kombinationen bilden, zahlenmäßig erfasst.
